# EUROPÄISCHE PATENTSCHRIFT

(11) **EP 0 749 796 B1**
(45) Veröffentlichungstag und Bekanntmachung des Hinweises auf die Patenterteilung: **17.11.1999**
(21) Anmeldenummer: 96105160.4
(22) Anmeldetag: 30.03.1996
(51) Int. Cl.: B23D 51/10

(54) **Vorrichtung zur Aufnahme des Spannendes eines Sägeblattes**
Device for holding the mounting portion of a saw blade
Dispositif pour recevoir la partie abloquable d'une lame de scie

(30) Priorität: 19.06.1995 DE 19521762
(43) Veröffentlichungstag der Anmeldung: 27.12.1996
(73) Patentinhaber: Metabowerke GmbH & Co., D-72622 Nürtingen (DE)
(72) Erfinder: Schnizler, Albrecht, 72622 Nürtingen (DE); Schulz, Manfred, Dipl.-Ing., 72622 Nürtingen (DE); Seyerle, Jörg, Dipl.-Ing., 73257 Köngen (DE)
(74) Vertreter: Elbertzhagen, Otto, Dipl.-Ing.

(56) Entgegenhaltungen:
- EP-A- 0 722 802
- FR-A- 990 111
- US-A- 2 621 689
- US-A- 4 106 181

## Beschreibung

Die Erfindung bezieht sich auf eine Vorrichtung des Spannendes eines einendig einspannbaren, hin- und herbeweglichen Sägeblattes der im Gattungsbegriff des Patentanspruchs 1 näher bezeichneten Art.

Solche Aufnahmevorrichtungen sind zur formschlüssigen Sicherung des Sägeblattes in seiner Längsrichtung ausgebildet, damit das Sägeblatt in seiner Hauptbelastungsrichtung, insbesondere in der Zugrichtung, von dem hin- und herbeweglichen Spannkörper, der in der Regel an einem Maschinenstößel sitzt, sicher mitgenommen wird. Das in der Regel flache Spannende des Sägeblattes, welches auch als Angel bezeichnet wird, hat dazu an einander gegenüberliegenden Seiten vorstehende Stegansätze, die sich mit den Sicherungskonturen im Spannkörper verhaken. Dazu wird das Spannende in Längsrichtung des Sägeblattes in die Aufnahmevorrichtung eingesteckt, bei Anlage an einem für die Stegansätze am Spannende vorgesehenen Anschlag quer zur Sägeblattebene verschoben, wonach der Formschluß zwischen dem Spannende des Sägeblattes und den Sicherungskonturen benachbart der Anlagefläche im Spannkörper hergestellt ist. In dieser Formschlußlage wird das Spannende des Sägeblattes durch das relativ zur Anlagefläche verschiebliche Spannglied beaufschlagt.

Ein Handhabungsnachteil bei Aufnahmevorrichtungen der vorgenannten Art liegt darin, daß nach dem Lösen des Spanngliedes das Sägeblatt oft nicht ohne umständliche Manipulationen aus dem sichernden Formschluß herausgebracht werden kann. Denn je nach unterschiedlicher Dicke des Sägeblattes bzw. seines Spannendes steht für die Verschiebung des Sägeblattes quer zu seiner Blattebene in der Aufnahmevorrichtung mehr oder weniger Platz zur Verfügung, weswegen vor allem bei dickeren Sägeblättern selbst dann schon die Verhakung des Spannendes mit den Sicherungskonturen im Spannkörper nicht aufgehoben werden kann, wenn das Sägeblatt gegenüber der Hubrichtung nur leicht gekippt ist.

Der Erfindung liegt deshalb die Aufgabe zugrunde, eine Aufnahmevorrichtung der gattungsgemäßen Art zu schaffen, bei der das Spannende des Sägeblattes bei gelöstem Spannglied selbsttätig aus der Formschlußsicherung herausbewegt wird.

Diese Aufgabe wird bei einer Aufnahmevorrichtung der gattungsbildenden Art nach der Erfindung durch die kennzeichnenden Merkmale des Patentanspruchs 1 gelöst.

Für die Erfindung ist wesentlich, mit der Aushebevorrichtung selbsttätig die Bewegung des Sägeblattes quer zu seiner Blattebene mit dem Lösen des Spanngliedes zu bewirken, wodurch die am Spannende des Sägeblattes angeordneten Sicherungsvorsprünge, welche meist die Gestalt von Stegansätzen haben, von den Sicherungskonturen, insbesondere von den Sicherungsvorsprüngen benachbart der Anlagefläche des Spannkörpers freikommen. Danach kann dann das Sägeblatt ohne Schwierigkeit in seiner Längsrichtung verschoben und aus der Aufnahmevorrichtung herausgezogen werden. Andererseits hindert die neue Aushebevorrichtung das Spannen des Sägeblattes nicht, weil über das Spannglied die entgegenwirkenden Kräfte der Aushebevorrichtung leicht zu überwinden sind.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Querschnitt durch eine Aufnahmevorrichtung für das Spannende eines einendig einspannbaren Stichsägeblattes in Höhe der Spannstelle gemäß der Linie I-I in Fig. 2 und
- Fig. 2: einen Längsschnitt durch den Spannkörper im Bereich der Spannstelle.

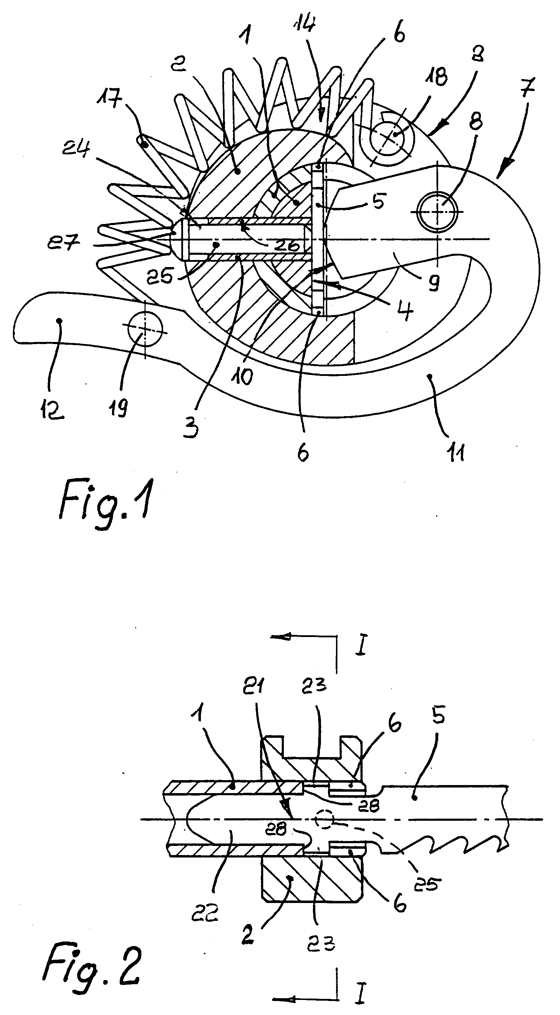

Im einzelnen zeigt Figur 1 das Unterende eines Stößels 1 einer Stichsäge, an dem eine werkzeuglos spannbare Aufnahme für das Einspannende 21 (Fig. 2) eines Stichsägeblattes 5 angeordnet ist. Mittels einer Spannhülse 3 ist der Stößel 1 mit einem Spannkörper 2 fest verbunden, über den sich die Spannkräfte schließen. Das Stichsägeblatt 5 wird am Einspannende so in der Spann- oder Aufnahmevorrichtung fixiert, daß es im wesentlichen in der Diametralebene des Stößels 1 liegt. Der Spannkörper 2 hat eine zylindrische Hüllform, die koaxial mit dem Stößel 1 ist.

Etwa in der Diametralebene dieser zylindrischen Hüllform des Spannkörpers 2 und damit in der Diametralebene des Stößels 1 ist am letzteren eine Anlagefläche 4 gebildet, gegen die das Einspannende 21 des Sägeblattes 5 zur Anlage gebracht werden kann, wonach es in Eingriff mit Sicherungskonturen, wie Sicherungsvorsprüngen 6 steht, die das Sägeblatt 5 in seiner Spannlage bei Anlage an der Anlagefläche 4 gegen ein Verschieben in Hubrichtung sichern, wie man insbesondere aus Figur 2 ersieht. Dazu hat das Sägeblatt 5 an seinem Einspannende 21 in der Blattebene seitlich vorstehende Formschlußglieder 23 in Gestalt von Stegansätzen, die in der Spannlage an den Sicherungsvorsprüngen 6 an der von der Einführungsseite des Sägeblattes 5 abgelegenen Seite anliegen. Um diese Position zu erreichen, kann das Sägeblatt 5 zunächst in seiner Längsrichtung in die Aufnahmevorrichtung soweit eingesteckt werden, bis es in seiner eingesteckten Endlage an Anschlagkanten 28, die durch das Stirnende des Stößels 1 gebildet werden, mit seinen Stegansätzen 23 anschlägt. Eine Kollision dieser Stegansätze 23 mit den Sicherungsvorsprüngen 6 benachbart der Anschlagfläche 4 ist hierbei vermieden, weil das Sägeblatt 5 parallel zur Diametralebene, in der die Anschlagfläche 4 liegt, soweit weg verschoben werden kann, daß beim Einführen die Stegansätze 3 an den Sicherungsvorsprüngen 6 vorbeigeführt werden können. Danach wird das Sägeblatt 5 mit seinem Einspannende 21 parallel zu der erwähnten Diametralebene zur Anlagefläche hin verschoben, womit die Stegansätze 23 die Sicherungsvorsprünge 6 hintergreifen.

Die Verspannung des Einspannendes 21 des Sägeblattes 5 gegen die Anlagefläche 4 erfolgt mittels eines Spanngliedes in Gestalt eines zweiarmigen Hebels 7, der an einem eine Schwenkachse 8 bildenden Lagerbolzen gelagert ist. Die Schwenkachse 8 des Hebels 7 ist mit Abstand gegenüber der Anlagefläche 4 parallel zur Hubachse angeordnet, und von der Schwenkachse 8 aus erstreckt sich in das Innere des Spannkörpers 2 ein Innenarm 9 des Hebels 7, der an seinem Innenende eine Exzenterkurve 10 hat. Durch Verschwenken des Hebels 7 um die Schwenkachse 8 kann dessen Innenarm 9 mit der Exzenterkurve 10, deren Exzentrität auf die Schwenkachse 8 bezogen ist, in Anlage am Einspannende 21 des Sägeblattes 5 gebracht werden. Hierbei entsteht über den Innenarm 9 und das Einspannende 21 des Sägeblattes 5 zwischen der Schwenkachse 8 und der Anlagefläche 4 eine Verspannung, deren Kraft sich über den Spannkörper 2 schließt.

Der Hebel 7 weist ferner einen Außenarm 11 auf, dessen Wirklänge wesentlich größer als die des Innenarms 9 des Hebels 7 ist. Unmittelbar von der Schwenkachse 8 aus nach innen hin verläuft der Außenarm 11 mit einer stärkeren Krümmung, um daran anschließend eine Bogenform einzunehmen, die an die Außenrundung des Spannkörpers 2 angepaßt ist. Somit verläuft der schwächer gekrümmte Bereich des Außenarms 11 des Hebels 7 beim Spannen eines dünneren Sägeblattes 5 etwa konzentrisch zur Hubachse, während beim Spannen eines dickeren Sägeblattes der Außenarm 11 des Hebels 7 weiter von der Umfangsseite des Spannkörpers 2 abgehoben ist. In der Offenlage des Hebels 7 steht der Außenarm 11 von der Umfangsseite des Spannkörpers 2 ab und gibt der Innenarm 9 durch wegschwenken der Exzenterkurve 10 von der Anschlagfläche 4 weg das Einspannende des Sägeblattes 5 frei. Hiernach kann das Sägeblatt 5 mit seinem Einspannende 21 soweit von der Anschlagfläche 4 abgehoben werden, daß der Formschluß zwischen den Stegansätzen 23 am Einspannende 21 des Sägeblattes 5 und den Sicherungsvorsprüngen 6 am Stößel 1 aufgehoben ist.

Der insgesamt etwa C-förmige Hebel 7 hat ein freies Griffende 12, welches entgegen der C-Krümmung leicht nach außen hin abgewinkelt ist, so kann auch in der nahezu am Spannkörper 2 anliegenden Lage das Griffende 12 leicht erfaßt werden.

Nahe dem Griffende 12 greift am Außenarm 11 des Hebels 7 eine Zugfeder 17 an, die im wesentlichen entlang dem Umfang des Spannkörpers 2 angeordnet und daran mittels eines Befestigungsbolzens 18 festgelegt ist. Teilweise kann die Zugfeder 17 in einen Einschnitt 14 des Spannkörpers 2 eintauchen, in dem der Befestigungsbolzen 18 in Radialrichtung gesehen vertieft angeordnet ist. Das gleiche trifft im übrigen auch für den Lagerbolzen 8 zu, auf dem der Hebel 7 gelagert ist. Somit ist die Zugfeder 17 bestrebt, den Außenarm 11 des Hebels 17 zum Spannkörper 2 hin anzuziehen, wodurch der Innenarm 9 des Hebels 7 in seine Spannlage gebracht wird, in der er mit seiner stirnseitigen Exzenterkurve 10 das Einspannende 21 des Sägeblattes 5 beaufschlagen kann.

Wie insbesondere Figur 1 veranschaulicht, ist im Spannkörper 2 bis in das Aufnahmeende des Stößels 1 hinein eine Aushebevorrichtung 24 angeordnet, die einen axial verschieblichen Bolzen 25 aufweist. Dieser Bolzen 25 sitzt in einer Bohrung 26, die zur Anlagefläche 4 hin öffnet. Die Bohrung 26 ist als Durchgangsbohrung ausgebildet und hat entsprechend eine Öffnung zur Umfangsseite des Spannkörpers 2 hin, die eine Austrittsstelle für den Bolzen 25 bildet. Die Bohrung 26 nimmt zugleich die Spannhülse 3 auf, welche den Spannkörper 2 und das aufnahmeseitige Ende des Stößels 1 miteinander verbindet. Folglich wird der axial verschiebliche Bolzen 25 in dieser Spannhülse 26 geführt, deren Achse in Radialrichtung zur Hubrichtung liegt und somit senkrecht auf der Anlagefläche 4 steht.

An der Austrittsstelle, also an der außenseitigen Mündung der Durchgangsbohrung 26, hat der Bolzen 25 einen Kopf 27, der gerundet oder ballig ist und in die Durchgangsbohrung 26 eintauchen kann, ohne mit der Spannhülse 3 zu kollidieren.

Über den Kopf 27 des Bolzens 25 ist die Zugfeder 17 hinweggeführt, die jeweils mit zumindest einem Windungsgang den Kopf 27 des Bolzens 25 beaufschlagt, wodurch der Bolzen 25 bestrebt ist, nach innen hin zu wandern und mit seinem Innenende aus der Anlagefläche 4 auszutreten. Die von der Zugfeder 17 auf den Bolzen 25 ausgeübte Verschiebekraft ist umso größer, je weiter der Hebel 7 in Löserichtung verschwenkt ist, so daß gerade dann die stärkste Verschiebewirkung erzielt ist, wenn der Innenarm 9 des Hebels 7 das gespannte Sägeblatt 5 wieder freigegeben hat.

So kann bei dem mit seiner Exzenterkurve 10 vom Sägeblatt bzw. dessen Einspannende 21 abgehobenem Innenarm 9 des Nebels 7 über die Verschiebung des Bolzens 25 das Spannende 21 soweit quer zu seiner Blattebene verschoben werden, daß die Stegansätze 23 am Einspannende 21 des Sägeblattes 5 vom Formschluß mit den Sicherungsvorsprüngen 6 am Ende des Stößels 1 freikommen. Dies ist dehalb besonders leicht zu bewerkstelligen, weil der über die Zugfeder 17 belastete Bolzen 25 in Hubrichtung gesehen auf der Höhe der Formschlußstelle liegt, also etwa auf der Höhe der als Formschlußglieder dienenden Stegansätze 23 am Spannende 21 des eingespannten Sägeblattes 5 angeordnet ist.

## Patentansprüche

1. Vorrichtung zur Aufnahme des Spannendes (21) eines einendig einspannbaren, hin- und herbeweglichen Sägeblattes (5), wie das einer Stichsäge, mit einer Anlagefläche (4) in einem Spannkörper (2), an oder benachbart der zum Hintergreifen durch Formschlußglieder (23) am Spannende des Sägeblattes quer zur Hubrichtung vorstehende Sicherungskonturen, wie Sicherungsvorsprünge (6), angeordnet sind, und mit einem am Spannkörper gelagerten, von der Anlagefläche abhebbaren sowie unter Mitnahme der Angel des Sägeblattes quer zu dessen Längsrichtung unter Herstellung des Formschlusses gegen die Anlagefläche verspannbaren Spannglied (7),
dadurch gekennzeichnet,
daß im Bereich der Anlagefläche (4) eine dem Spannglied (7) in der Abhebebewegung quer zur Hubrichtung nachfolgende Aushebevorrichtung (24) für das Spannende (21) des Sägeblattes (5) angeordnet ist, deren auf die Längsrichtung des Sägeblattes (5) bezogener Querhub größer als der Überstand der Sicherungsvorsprünge (6) über die Anlagefläche (4) ist.

2. Vorrichtung nach Anspruch 1,
dadurch gekennzeichnet,
daß die Aushebevorrichtung (24) einen in seiner Achsrichtung verschieblichen, federbelasteten Bolzen (25) aufweist, der in einer zur Anlagefläche (4) hin offenen Bohrung (26) im Spannkörper (2) angeordnet ist.

3. Vorrichtung nach Anspruch 2,
dadurch gekennzeichnet,
daß der Bolzen (25) in Hubrichtung des Spannkörpers (2) etwa auf der Höhe der Formschlußglieder (23) am Spannende (21) des eingespannten Sägeblattes (5) angeordnet ist.

4. Vorrichtung nach einem der Ansprüche 1 bis 3
dadurch gekennzeichnet,
daß das Spannglied (7) ein zweiarmiger Hebel mit einem kürzeren Innenarm (9), an dessen Stirnende eine das Sägeblatt (5) beim Spannen beaufschlagende Exzenterkurve (10) angeordnet ist und mit einem längeren, in Umfangsrichtung des Spannkörpers (2) gebogenen Außenarm (11) mit einem freien Griffende (12) ist, an oder nahe dem am Außenarm (11) eine in Umfangsrichtung um den Spannkörper (2) herumgeführte Zugfeder (17) in Spannrichtung angreift, die den in der als Durchgangsbohrung ausgebildeten Bohrung (26) geführten Bolzen (25) an dessen von der Anlagefläche (4) abgelegenen Austrittsstelle am Spannkörper (2) beaufschlagt.

5. Vorrichtung nach Anspruch 4,
dadurch gekennzeichnet,
daß der Bolzen (25) an der Austrittsstelle am Spannkörper (2) einen gerundeten oder balligen Kopf (27) hat.

6. Vorrichtung nach Anspruch 4 oder 5,
dadurch gekennzeichnet,
daß in der Bohrung (26) des Spannkörpers (2) eine diesen mit einem Stößel (1) verbindende Spannhülse (3) angeordnet ist, in der der Bolzen (25) unmittelbar geführt ist.

## Claims

1. A device for holding the mounting portion (21) of a single ended, clampable, reciprocable saw blade (5), such as a jig saw, with an abutment surface (4) in a chuck body (2), in or adjacent to which for the purpose of engaging through positively interlocking components (23) at the mounting portion of the saw blade at right angles to the stroke direction there are securing contours, such as securing projections (6) and a clamping component (7) journalled on the tension body which can be lifted from the abutment surface, and tensioned against the abutment surface while receiving the tang of the saw blade at right angles to its longitudinal direction, thereby achieving the positive interlocking,
characterised in that
in the region of the abutment surface (4) there is a withdrawal device (24) for the mounting portion (21) of the saw blade (5) which follows the clamping component (7) in the withdrawal movement at right angles to the strok direction, the transverse lift of which in relation to the longitudinal direction of the saw blade (5) is greater than the projection of the securing projections (6) over the abutment surface (4).

2. A device according to Claim 1,
characterised in that
the withdrawal device (24) has a spring-loaded bolt (25) which can be displaced in its axial direction, and which is positioned in the clamp body (2) in a bore (26) opening on to the abutment surface (4).

3. A device according to Claim 2,
characterised in that
the bolt (25) is positioned in the stroke direction of the clamping body (2) approximately at the level of the positively interlocking components (23) at the mounting portion (21) of the clamped saw blade (5).

4. A device according to one of the Claims 1 to 3,
characterised in that
the clamping component (7) is a two-armed lever with a shorter inner arm (9) on the front end of which there is an eccentric curve (10) contacting the saw blade (5) during clamping, and with a longer outer arm (11) curved in the circumferential direction of the clamp body (2) with a free grip end (12), on or near to which a tension spring (17) wound in the circumferential direction around the clam body (2) grips in the tension direction against which the spring (17) which contacts the bolt (25) inside the bore (26) formed as a through bore at its exit point from the clamp body (2) lying away from the clamping surface (4).

5. A device according to Claim 4,
characterised in that
the bolt (25) has a rounded or ball-shaped head (27) at the exit point on the clamp body (2).

6. A device according to Claim 4 or Claim 5,
characterised in that
in the bore (26) of the clamp body (2) there is a clamping sleeve (3) connecting the clamp body to a bushing (1), in which the bolt (25) is directly guided.

## Revendications

1. Dispositif destiné à abloquer l'extrémité (21) d'une lame de scie (5) maintenue par une seule extrémité et mobile en va-et-vient, telle que la lame d'une scie à guichet, lequel dispositif est pourvu d'un corps de serrage (2) comprenant une surface de butée (4) avec, sur elle-même ou à côté d'elle, des contours de sécurité en forme de saillies (6) transversales par rapport au sens de course, lesquels saisissent l'extrémité à abloquer de la lame de scie à l'aide d'organes de blocage à engagement géométrique (23), ainsi qu'un organe de serrage (7) qui, monté sur le corps de serrage (2), peut être soulevé de la surface de butée et contraint contre celle-ci en créant un blocage par engagement géométrique, le châssis de la scie étant entraîné perpendiculairement à son sens longitudinal,
caractérisé en ce qu'un dispositif de levée (24) suivant le mouvement de levée de l'organe de de blocage (7), est prévu dans la zone de la surface de butée (4) pour l'extrémité à abloquer (21) de la lame d e scie (5), la course de ce dispositif, transversale par rapport au sens de la longueur de la lame de scie (5), est supérieure à la saillie des contours de sécurité (6) au-dessus de la surface de butée (4).

2. Dispositif selon la revendication 1,
caractérisé en ce que le dispositif de levée (24) présente un goujon (25) qui, soumis à l'action d'un ressort et déplaçable dans son sens axial, est disposé dans un forure (26) pratiquée dans le corps de serrage (2) et ouverte vers la surface de butée (4).

3. Dispositif selon la revendication 2,
caractérisé en ce que le goujon (25) est installé à l'extrémité bloquée (21) de la lame de scie (5) dans le sens de course du corps de serrage, à peu près à la hauteur de l'organe de blocage par engagement géométrique (23).

4. Dispositif selon l'une des revendications 1 à 3,
caractérisé en ce que l'organe de blocage (7) est un levier à deux bras dont l'un est un bras interne, le plus court (9), pourvu à son extrémité frontale d'une courbe d'excentrique (10), à laquelle la lame de scie (5) est soumise lors du serrage, tandis que l'autre est un bras extérieur, plus long (11), courbé dans le sens de la circonférence du corps de serrage (2) et pourvu d'une extrémité libre de préhension (12) sur ou à proximité de laquelle un ressort de traction (17), qui entoure le corps de serrage (2) dans le sens circonférentiel de celui-ci, attaque le bras extérieur (11) dans le sens de serrage, le goujon (25) qui traverse la forure (26), conçue en forme de trou de passage, étant soumis, à l'action de ce ressort à sa sortie du corps de serrage (2), du côté opposé à la surface de butée (4).

5. Dispositif selon la revendication 4,
caractérisé en ce le goujon (25) est pourvu, sur son côté de sortie du corps de serrage (2) d'une tête arrondie ou bombée.

6. Dispositif selon la revendication 4 ou 5, caractérisé en ce qu'une douille de serrage (3), dans laquelle le goujon passe directement, est disposée dans la forure (26) du corps de serrage (2) qu'elle relie avec un coulisseau (1).
